## Europäisches Patentamt
## European Patent Office
## Office européen des brevets

(19)

(11) Veröffentlichungsnummer : **0 017 607**
**B1**

(12)

# EUROPÄISCHE PATENTSCHRIFT

(45) Veröffentlichungstag der Patentschrift :
20.04.83

(21) Anmeldenummer : 80730018.1

(22) Anmeldetag : 05.03.80

(51) Int. Cl.³ : **H 02 K   1/20, H 02 K   9/19**

(54) **Flüssigkeitsgekühlte elektrische Maschine.**

(30) Priorität : 04.04.79 DE 2912972

(43) Veröffentlichungstag der Anmeldung :
15.10.80 Patentblatt 80/21

(45) Bekanntmachung des Hinweises auf die Patenterteilung : 20.04.83 Patentblatt 83/16

(84) Benannte Vertragsstaaten :
**AT CH FR GB SE**

(56) Entgegenhaltungen :
AT B 266 979
DE B 1 078 681
DE C 210 699
DE U 7 910 106
GB A 1 307 215

(73) Patentinhaber : **SIEMENS AKTIENGESELLSCHAFT**
**Berlin und München Wittelsbacherplatz 2**
**D-8000 München 2 (DE)**

(72) Erfinder : **Spirk, Franz**
**Schuckertdamm 322**
**D-1000 Berlin 13 (DE)**
Erfinder : **Vandamme, Detlef**
**Am Birkenknick 4**
**D-1000 Berlin 37 (DE)**

Jouve, 18, rue St-Denis, 75001 Paris, France

Flüssigkeitsgekühlte elektrische Maschine

Die Erfindung betrifft eine flüssigkeitsgekühlte elektrische Maschine, bei welcher die das Ständerblechpaket zusammenpressenden, Druckfinger aufweisenden Druckplatten auf der dem Ständerblechpaket zugewandten Oberfläche aus Aussparungen gebildete Kühlkanäle für den Durchfluß der Kühlflüssigkeit enthalten. Dies ist aus der AT-BS-266 979 bekannt. Weil gerade in den Stirnzonen von Ständerblechpaketen elektrischer Großmaschinen durch den vom Läufer axial einströmenden magnetischen Fluß Wirbelströme induziert werden, die zu starken örtlichen Temperaturerhöhungen führen können, ist die Verwendung von derartigen direkt flüssigkeitsgekühlten Druckplatten vorteilhaft. Bei der bekannten Druckplatte sind die Kühlkanäle für die Kühlflüssigkeit aus Kupferrohren gebildet, welche in die zur Oberfläche der Druckplatte hin offenen Aussparungen der Druckplatte eingelegt sind. Derartige in die Druckplatten eingelegte Kühlrohre haben aber den Nachteil, daß der Wärmeübergang zwischen der Druckplatte und der Kühlflüssigkeit durch das Kühlrohr bzw. den Kontakt zwischen Kühlrohr und Druckplatten behindert ist. Da außerdem die Kühlrohre in offenen Nuten liegen, kann eine Beschädigung ihrer freiliegenden Oberfläche nicht mit Sicherheit vermieden werden, da sie eine geringere Festigkeit als die Druckplatte haben.

Der Erfindung liegt die Aufgabe zugrunde, die Wärmeübergangsverhältnisse innerhalb der Druckplatten zu verbessern, ohne deren Festigkeit zu beeinträchtigen. Zur Lösung dieser Aufgabe bestehen gemäß der Erfindung die Druckplatten aus nichtrostendem austenitischem Chromnickelstahl und die benachbart zu den Druckfingern querverlaufenden Aussparungen sind durch eingeschweißte Deckplatten aus nichtrostendem Stahl verschlossen, die auf der den Aussparungen zugewandten Oberfläche mit Rippen versehen sind. Durch die Verwendung von austenitischem Chromnickelstahl für die Druckplatte sind die elektrischen Verluste in den Druckfingern kleingehalten. Außerdem weist dieser Stahl eine hohe mechanische Festigkeit auf, um den hohen mechanischen Beanspruchungen, denen eine derartige Druckplatte unterworfen ist, zu genügen, und ist weiterhin rostbeständig und unmagnetisch. Durch die besondere Gestaltung der Kühlkanäle aus einer abgedeckten Aussparung der Druckplatte selbst steht deren Material unmittelbar mit der Kühlflüssigkeit in Verbindung, wodurch jeder zusätzliche Wärmewiderstand vermieden wird. Da die Deckplatte aus nichtrostendem Stahl besteht, ist trotzdem jede Korrosionsgefahr vermieden.

Die Deckplatten sind auf der den Aussparungen zugewandten Oberfläche mit Rippen versehen. Dadurch wird der Querschnitt des Kühlkanals verringert, unabhängig von den zur Herstellung der wasserdichten und druckfesten Schweißnähte notwendigen Abständen. Man kann somit den Kühlkanalquerschnitt so klein wählen, daß die Strömungsgeschwindigkeit der durchfließenden Kühlflüssigkeit so groß wird, daß Turbolenzen auftreten. Dadurch wird der Wärmeübergang nochmals verbessert. Außerdem erhält man den Vorteil, daß die wärmeabgebende Oberfläche der Deckplatten ebenfalls vergrößert ist.

Die Druckplatte kann vorzugsweise im Gesenk geschmiedet sein, weil sich dann außerdem ein günstiger Faserverlauf und Gefügezustand des Materials ergibt. Eine Gußausführung der Druckplatte ist aber ebenfalls möglich.

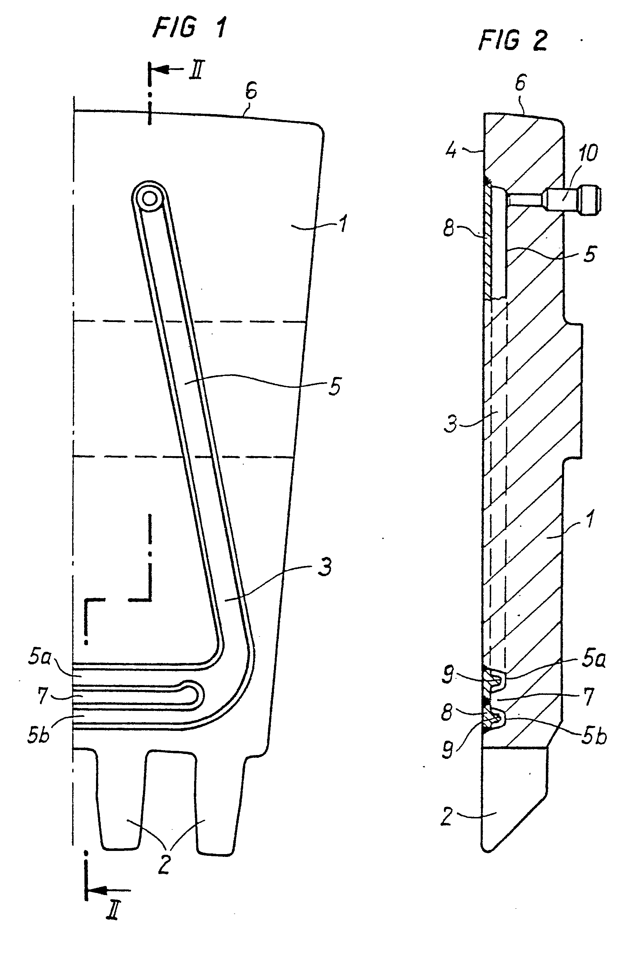

Im folgenden sei die Erfindung noch anhand des in den Figuren 1 und 2 dargestellten Ausführungsbeispiels näher erläutert.

Figur 1 zeigt eine Aufsicht auf die dem Blechpaket zugewandten Seite einer halben Druckplatte, bei welcher die Deckplatten weggelassen sind.

Figur 2 zeigt einen Schnitt entlang der Linie II-II in Fig. 1.

Bei einem elektrischen Wasserkraftgenerator wird das Ständerblechpaket von kreissegmentförmigen Druckplatten 1 zusammengepreßt, deren Druckfinger 2 jeweils auf den Zähnen des Ständerblechpaketes anliegen. Zur Vermeidung von Wirbelströmen im Bereich der Druckfinger 2 notwendige und bekannte Maßnahmen sind nicht dargestellt. Um die trotzdem hauptsächlich im Bereich der Druckfinger 2 und in ihrer Nähe entstehende Temperaturerhöhung wirkungsvoll abführen zu können, ist die Druckplatte 1 durch Kühlkanäle 3 direkt mit Wasser gekühlt.

Diese Kühlkanäle 3 liegen auf der dem Ständerblechpaket zugewandten Oberfläche 4 der Druckplatte 1. Sie sind durch Aussparungen 5 gebildet, die beim Gesenkschmieden der aus austenetischen Chromnickelstahl bestehenden Druckplatte 1 entstehen. Die Aussparungen 5 beginnen in der Nähe des am Ständerblechpaketrücken liegenden Randes 6 der Druckplatte 1, führen bis in die Nähe des äußeren Druckfingers 2 und verlaufen dann quer in unmittelbarer Nähe der Druckfinger 2, wobei sich hier die Aussparung 5 durch eine mittlere Aufwölbung 7 in zwei parallele Zweige 5a und 5b teilt. Diese Aussparungen 5, 5a und 5b sind durch eine entsprechend geformte Deckplatte 8 verschlossen, die absolut wasserdicht und druckfest mit den Rändern der Aussparung 5, 5a, 5b verschweißt ist. Im Bereich der parallel verlaufenden Aussparungen 5a und 5b trägt die Deckplatte 8 auf der den Aussparungen 5a, 5b zugewandten Oberfläche Rippen 9. Diese Rippen 9 ragen somit in die durch die Aussparungen 5a, 5b gebildeten Kühlkanäle 3 hinein und verringern ihren Querschnitt, so daß im Bereich benachbart zu den Druckfingern 2 die Durchströmgeschwindigkeit des Wassers vergrößert wird. Dies hat den Vorteil, daß Turbulenzerscheinungen auftreten, welche den Wärmeübergang verbessern. Außerdem wird durch die Rippen 9 die mit dem Wasser in Berührung kommende Oberfläche der Deckplatten 8 vergrößert. Zur Wasserzu- bzw. -abführung sind die Enden der Aussparung 5, die in der Nähe des Randes 6 der Druckplatte 1 liegen, mit Rohranschlußstücken 10 verbunden.

Eine derartig ausgebildete Druckplatte 1 hat den Vorteil, daß ihr Material unmittelbar die Wände der Kühlkanäle 3 bildet. Der Kontakt zwischen dem Kühlwasser und der Druckplatte ist also direkt und nicht durch zusätzliche Wärmeübergangswiderstände erschwert. Das gleiche gilt für die Deckplatte 8, die ihrerseits unmittelbar auf dem Ständerblechpaket anliegt und vom Wasser angeströmt wird. Es wird also ein geringster Wärmewiderstand zwischen den Stirnzonen des Ständerblechpaketes der Druckplatte 1 bzw. der Deckplatte 8 und der Kühlflüssigkeit erreicht. Durch die besondere Formgebung der Kühlkanäle 3 wird außerdem nicht nur die Wärme aus dem Bereich benachbart zu den Druckfingern 2, sondern auch aus dem restlichen Bereich der Druckplatte 1 abgeführt.

## Ansprüche

1. Flüssigkeitsgekühlte elektrische Maschine, bei welcher die das Ständerblechpaket zusammenpressenden, Druckfinger (2) aufweisenden Druckplatten (1) auf der dem Ständerblechpaket zugewandten Oberfläche aus Aussparungen (5, 5a, 5b) gebildete Kühlkanäle (3) für den Durchfluß der Kühlflüssigkeit enthalten, dadurch gekennzeichnet, daß die Druckplatten (1) aus nichtrostendem austenitischen Chromnickelstahl bestehen und daß die benachbart zu den Druckfingern (2) querverlaufenden Aussparungen (5, 5a, 5b) durch eingeschweißte Deckplatten (8) aus nichtrostendem Stahl verschlossen sind, die auf der den Aussparungen (5a, 5b) zugewandten Oberfläche mit Rippen (9) versehen sind.

2. Flüssigkeitsgekühlte elektrische Maschine nach Anspruch 1, dadurch gekennzeichnet, daß in unmittelbarer Nähe der Druckfinger (2) zwei nebeneinander, quer zu den Druckfingern (2) verlaufende Aussparungen (5a, 5b) angeordnet sind.

3. Flüssigkeitsgekühlte elektrische Maschine nach Anspruch 1, dadurch gekennzeichnet, daß die Aussparungen (5) bis in die Nähe des am Rücken des Ständerblechpaketes liegenden Randes (6) der Druckplatte (1) geführt und dort mit Mitteln (10) zur Kühlflüssigkeitszu- und -abführung verbunden sind.

4. Flüssigkeitsgekühlte elektrische Maschine nach Anspruch 1, dadurch gekennzeichnet, daß die Druckplatten (1) in Gesenk geschmiedet sind.

## Claims

1. A liquid-cooled electric machine, wherein the pressure plates (1) having pressure fingers (2) and which press together the stator laminations, contain at their surfaces facing the stator laminations, cooling channels (3) for the throughput of the coolant, formed by recesses (5, 5a, 5b), characterised in that the pressure plates (1) are made of stainless austenitic chromium nickel steel and that the recesses (5, 5a, 5b), which run transversely adjacent to the pressure fingers (2), are sealed by welded-on cover plates (8) which are made of stainless steel and provided with ribs (9) on the surfaces facing the recesses (5a, 5b).

2. A liquid-cooled electric machine according to Claim 1, characterised in that in the immediate vicinity of the pressure fingers (2), there are arranged two recesses (5a, 5b) which run beside one another and transversely to the pressure fingers (2).

3. A liquid-cooled electric machine according to Claim 1, characterised in that the recesses (5) are led to the vicinity of the edge (6) of the pressure plate (1), which is arranged at the rear of the stator laminations, and are connected to means (10) for supplying and discharging coolant.

4. A liquid-cooled electric machine according to Claim 1, characterised in that the pressure plates (1) are drop-forged.

## Revendications

1. Machine électrique à refroidissement par liquide, dans laquelle les plaques de pression (1), présentant des doigts de pression (2) et comprimant le paquet de tôles statorique, contiennent, sur leur surface dirigée vers le paquet de tôles statorique, des canaux de refroidissement (3) formés par des évidements (5, 5a, 5b), pour le passage du liquide de refroidissement, caractérisée en ce que les plaques de pression (1) sont en un acier inoxydable austénitique au chromenickel et que les évidements (5, 5a, 5b) qui s'étendent au voisinage des doigts de pression (2) et transversalement à ces derniers, sont fermés par des plaques de recouvrement soudées (8) en acier inoxydable, qui sont garnies de nervures (9) sur leur surface dirigée vers les évidements (5a, 5b).

2. Machine électrique à refroidissement par liquide selon la revendication 1, caractérisée en ce que deux évidements (5a, 5b), s'étendant l'un à côté de l'autre transversalement aux doigts de pression (2), sont disposés au voisinage immédiat des doigts de pression (2).

3. Machine électrique à refroidissement par liquide selon la revendication 1, caractérisée en ce que les évidements (5) s'étendent jusqu'au voisinage du bord (6) de la plaque de pression (1), qui se trouve au dos du paquet de tôles, et y sont reliés à des moyens (10) pour l'amenée et l'évacuation du liquide de refroidissement.

4. Machine électrique à refroidissement par liquide selon la revendication 1, caractérisée en ce que les plaques de pression (1) sont forgées en matrice.

FIG 1

FIG 2